(19) Europäisches Patentamt
European Patent Office
Office européen des brevets

(11) **EP 2 570 287 B1**

(12) **EUROPÄISCHE PATENTSCHRIFT**

(45) Veröffentlichungstag und Bekanntmachung des Hinweises auf die Patenterteilung:
**01.01.2020 Patentblatt 2020/01**

(21) Anmeldenummer: **12178069.6**

(22) Anmeldetag: **26.07.2012**

(51) Int Cl.:
*B60L 53/14* (2019.01)    *B60L 50/16* (2019.01)
*B60L 50/51* (2019.01)    *B60L 53/64* (2019.01)
*B60L 53/65* (2019.01)    *B60L 53/66* (2019.01)
*B60L 1/00* (2006.01)

(54) **Energieversorgungseinheit und Verfahren zum Ermitteln von aufgenommener elektrischer Energie**

Energy supply unit and method for determining absorbed electrical energy

Unité d'alimentation en énergie et procédé de détermination d'énergie électrique enregistrée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2011 DE 102011082737**

(43) Veröffentlichungstag der Anmeldung:
**20.03.2013 Patentblatt 2013/12**

(73) Patentinhaber: **ROBERT BOSCH GMBH**
**70442 Stuttgart (DE)**

(72) Erfinder:
• **Aumayer, Richard**
**31199 Diekholzen (DE)**
• **Weber, Werner**
**71665 Vaihingen (DE)**

(56) Entgegenhaltungen:
**GB-A- 2 273 614    JP-B2- 3 541 480**
**US-A- 5 565 755**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Energieversorgungseinheit für ein Kraftfahrzeug mit einem elektrischen Energiespeicher zum Speichern von elektrischer Energie, einem elektrischen Anschluss zum Anschließen an eine Ladestation, einem ersten Stromzweig, um einen elektrischen Antrieb des Kraftfahrzeugs mit elektrischer Energie zu versorgen, und einem zweiten Stromzweig, um Heiz- und/oder Klimatisierungsmittel des Kraftfahrzeugs mit elektrischer Energie zu versorgen.

Die vorliegende Erfindung betrifft ferner einen Kraftfahrzeugantriebsstrang mit einer elektrischen Maschine und einer Energieversorgungseinheit der oben genannten Art.

Schließlich betrifft die vorliegende Erfindung ein Verfahren zum Ermitteln von aufgenommener elektrischer Energie mittels einer Energieversorgungseinheit der oben beschriebenen Art.

Stand der Technik

Auf dem Gebiet der Kraftfahrzeug-Antriebstechnik ist es allgemein bekannt, eine elektrische Maschine als alleinigen Antrieb zu verwenden. Derartige Elektrofahrzeuge weisen üblicherweise einen elektrischen Energiespeicher auf, der an entsprechenden Ladestationen mit elektrischer Energie aufgeladen werden kann.

Derartige Elektrofahrzeuge verwenden üblicherweise die in dem Energiespeicher gespeicherte elektrische Energie für alle Komponenten des Fahrzeugs, insbesondere für den elektrischen Antrieb als auch zum Heizen und/oder Klimatisieren eines Innenraums.

Die elektrische Energie, die von den einzelnen Komponenten des Elektrofahrzeugs aufgenommen wird, wird üblicherweise nicht separat erfasst, so dass ein Anteil der elektrischen Energie, der für den Antrieb des Fahrzeugs notwendig ist, nicht ermittelt werden kann.

Bei unterschiedlichen Steuersätzen für Energie zur Fortbewegung bzw. zum Transport und für Heizung bzw. Klimatisierung von Fahrzeugen ist es daher nicht möglich, die speziell aufgenommene Energie unterschiedlich zu berechnen bzw. mit einem unterschiedlichen Steuersatz abzurechnen.

Die Druckschrift GB2273614 wird als nächstliegender Stand der Technik angesehen und offenbart die Merkmale aus dem Oberbegriff des Anspruchs 1.

Offenbarung der Erfindung

Die vorliegende Erfindung stellt daher eine Energieversorgungseinheit der oben genannten Art bereit, welche die Merkmale des unabhängigen Anspruchs 1 aufweist und bei der Leistungserfassungsmittel vorgesehen sind, die dazu ausgebildet sind, die von einem elektrischen Antrieb aufgenommene Energie und die von Heiz- und/oder Klimatisierungsmitteln aufgenommene elektrische Energie separat zu erfassen.

Ferner wird daher ein Kraftfahrzeugantriebsstrang mit einer elektrischen Maschine zum Bereitstellen von Antriebsleistung und mit einer Energieversorgungseinheit der oben beschriebenen Art bereitgestellt, welcher die Merkmale des abhängigen Anspruchs 5 aufweist.

Schließlich stellt die vorliegende Erfindung daher ein Verfahren zum Ermitteln von aufgenommener elektrischer Energie mittels einer Energieversorgungseinheit der oben beschriebenen Art bereit, welches die Merkmale des unabhängigen Anspruchs 6 aufweist, wobei die von einem elektrischen Antrieb aufgenommene elektrische Energie bestimmt wird und wobei die von Heiz- und/oder Klimatisierungsmitteln aufgenommene elektrische Energie separat bestimmt wird.

Vorteile der Erfindung

Durch die vorliegende Erfindung wird die jeweils aufgenommene elektrische Energie separat erfasst und bei unterschiedlichen Steuersätzen für Fortbewegungsenergie und Heiz- bzw. Klimatisierungsenergie die aufgenommene Leistung mit unterschiedlichen Steuersätzen abgerechnet. Dadurch können die Kosten zum Betreiben eines Elektrofahrzeugs reduziert werden.

Ferner kann durch die separate Erfassung der elektrischen Energie für die Fortbewegung eine entsprechende Kraftfahrzeugsteuer bzw. eine entsprechende Gebühr zur Benutzung von Fahrtwegen berechnet werden.

Im Allgemeinen kann dadurch eine Kostenberechnung für die aufgenommene elektrische Energie einfacher und genauer gestaltet werden.

Erfindungsgemäß weist die Energieversorgungseinheit eine Steuereinheit auf, die mit den Leistungserfassungsmitteln verbunden ist, um Werte der jeweils aufgenommenen elektrischen Energie zu bestimmen.

Dadurch wird aus Messwerten eine entsprechende aufgenommene elektrische Energie bestimmt und anderen Elementen oder Komponenten des Kraftfahrzeugs bereitgestellt.

Erfindungsgemäß weist die Steuereinheit Speichermittel auf, um die Werte der aufgenommenen elektrischen Energie zu speichern.

Dadurch können die Werte der jeweils aufgenommenen elektrischen Energie über einen längeren Zeitraum erfasst werden und von Zeit zu Zeit zur Auswertung an eine andere Komponente des Kraftfahrzeugs oder an eine externe Komponente weitergeleitet werden, wodurch die Auswertung komfortabler wird.

Erfindungsgemäß ist die Steuereinheit mit Leistungserfassungsmitteln verbunden, die den Anschlussmitteln zugeordnet sind, um die gesamte von der Energieversorgungseinheit aufgenommene Energie zu bestimmen.

Dadurch können die separat gemessenen Energiewerte auf Plausibilität geprüft werden bzw. kann die von anderen elektrischen Komponenten aufgenommene Energie bestimmt werden.

Es ist weiterhin bevorzugt, wenn die Steuereinheit mit einer Schnittstelle verbunden ist, die dazu ausgebildet ist, mit einer externen Komponente, insbesondere der externen Ladestation Daten auszutauschen, insbesondere um die Werte der beim Laden aufgenommenen bzw. im Antrieb verbrauchten und/oder in den Heiz- und/oder Klimatisierungsmitteln verbrauchten elektrischen Energie zu übermitteln.

Dadurch können die Werte der jeweils aufgenommenen elektrischen Energie mit einfachen Mitteln vom Fahrzeug auf eine externe Komponente übertragen werden und entsprechend ausgewertet werden. Insbesondere können die Daten an die externe Ladestation übertragen werden, wenn der elektrische Energiespeicher des Kraftfahrzeugs aufgeladen wird. Die externe Ladestation kann die unterschiedlichen Werte dazu verwenden, um einen Preis für die elektrische Energie, die zum Laden des Energiespeichers notwendig ist, zu berechnen.

Es ist weiterhin bevorzugt, wenn die Leistungserfassungsmittel Spannungserfassungsmittel zum Erfassen einer elektrischen Spannung des elektrischen Energiespeichers und Stromerfassungsmittel zum Erfassen eines elektrischen Stroms der Stromzweige aufweist.

Dadurch kann die von den entsprechenden Komponenten aufgenommene elektrische Energie mit einfachen Mitteln präzise erfasst werden.

Bei dem erfindungsgemäßen Verfahren ist es besonders bevorzugt, wenn die bestimmten Werte der jeweiligen Energieaufnahme gespeichert werden und bei einem Ladevorgang eines elektrischen Energiespeichers des Kraftfahrzeugs an eine Ladestation übermittelt werden.

Dadurch kann die Ladestation entsprechend der unterschiedlich aufgenommenen Energiemengen einen Preis für die elektrische Energie ermitteln und entsprechend verrechnen. Dadurch können die Kosten zum Betreiben des Elektrofahrzeugs reduziert werden.

Es ist ferner bevorzugt, wenn ein Wirkungsgrad eines Energiespeichers bei der Bestimmung der jeweils aufgenommenen elektrischen Energie berücksichtigt wird.

Dadurch wird das Verfahren zum Bestimmen der aufgenommenen elektrischen Energie noch präziser.

Es ist weiterhin bevorzugt, wenn während des Ladevorgangs des elektrischen Energiespeichers ein Wert entsprechend der von den Heiz- und/oder Klimatisierungsmitteln während des Ladevorgangs aufgenommenen elektrischen Energie an die Ladestation übermittelt wird.

Dadurch kann die direkt aufgenommene und verbrauchte Energie sofort mit dem entsprechenden Preis abgerechnet werden und es braucht der Wirkungsgrad des Energiespeichers nicht berücksichtigt zu werden.

Es ist weiterhin von besonderem Vorzug, wenn die Kosten für die gesamte aufgenommene elektrische Energie auf der Grundlage der separat bestimmten Energieaufnahmen ermittelt werden.

Dadurch können die Kosten für das Betreiben des Kraftfahrzeugs präzise bestimmt werden und mit unterschiedlichen Steuersätzen besteuert werden.

Es versteht sich, dass die Merkmale, Eigenschaften und Vorteile der erfindungsgemäßen Energieversorgungseinheit auch entsprechend auf das erfindungsgemäße Verfahren zutreffen bzw. anwendbar sind.

Kurze Beschreibung der Zeichnungen

Fig. 1 zeigt in schematischer Form ein Kraftfahrzeug mit einem Antriebsstrang, der eine elektrische Maschine, einen Energiespeicher sowie ein elektromagnetisches Übertragungsglied zum Aufladen des Energiespeichers aufweist; und

Fig. 2 zeigt in schematischer Form eine Energieversorgungseinheit für ein Kraftfahrzeug zum separaten Erfassen von Antriebsleistung und Heiz- bzw. Klimatisierungsleistung.

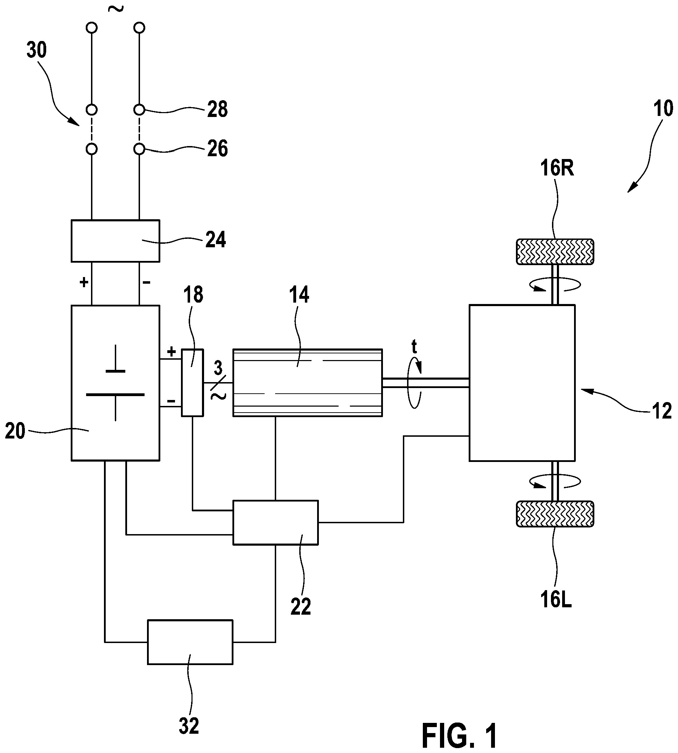

In Fig. 1 ist ein Kraftfahrzeug schematisch dargestellt und allgemein mit 10 bezeichnet. Das Kraftfahrzeug 10 weist einen Antriebsstrang 12 auf, der eine elektrische Maschine 14 zur Bereitstellung von Antriebsleistung beinhaltet. Der Antriebsstrang dient zum Antreiben von angetriebenen Rädern 16L, 16R des Fahrzeugs 10.

Die elektrische Maschine 14 stellt an einer Abtriebswelle ein Drehmoment t bereit und dreht mit einer einstellbaren Drehzahl.

Der Antriebsstrang 12 kann dazu eingerichtet sein, das Fahrzeug 10 alleine mittels der elektrischen Maschine 14 anzutreiben (Elektrofahrzeug). Alternativ kann die elektrische Maschine 14 Teil eines Hybrid-Antriebsstranges 12 sein, wobei der Antriebsstrang 12 einen weiteren, in Fig. 1 nicht näher bezeichneten Antriebsmotor wie eine Verbrennungskraftmaschine oder dergleichen beinhalten kann. Ferner kann der Antriebsstrang 12 in diesem Falle ein Getriebe oder dergleichen aufweisen.

Die elektrische Maschine 14 ist in diesem Fall mehrphasig ausgebildet (im vorliegenden Fall mit drei Phasen) und wird mittels einer Leistungselektronik 18 angesteuert. Die Leistungselektronik 18 ist mit einem elektrischen Energiespeicher 20, wie einer Gleichspannungsquelle (zum Beispiel Akkumulator) des Fahrzeugs 10 verbunden und dient dazu, eine von dem Energiespeicher 20 bereitgestellte elektrische Energie in Form von Gleichspannung für die drei Phasen der elektrischen Maschine umzurichten. Die Leistungselektronik 18, die elektrische Maschine 14, der elektrische Energiespeicher 20 und weitere Komponenten des Antriebsstranges 12 sind mit einer Steuereinheit 22 verbunden, um beispielsweise Istwerte und Sollwerte der elektrischen Maschine 14 zu vergleichen, die elektrische Maschine 14 über die zugeführte Leistung zu steuern bzw. zu regeln und den Ladungszustand des elektrischen Energiespeichers 20 zu prüfen. Die Leistungselektronik 18 kann ferner dazu dienen, im Schubbetrieb des Kraftfahrzeugs 10 Rekuperationsenergie, die von der elektrischen Maschine 14 im Generatorbetrieb erzeugt wird, im elektrischen Energiespeicher 20 einzuspeisen, um diesen entsprechend aufzuladen. So kann vorteilhafterweise Bremsenergie des Kraftfahrzeugs 10 zurückgewonnen werden und später als Antriebsenergie genutzt werden. Der elektrische Energiespeicher 20 ist über eine Ladungselektronik 24 mit einem Übertragungsglied 26 verbunden. Das Übertragungsglied 26 bildet eine Schnittstelle zum Aufnehmen von elektrischer Energie. Das Übertragungsglied 26 ist dazu ausgebildet, zusammen mit einem weiteren Übertragungsglied 28 eine Übertragungseinheit 30 zu bilden. Das Übertragungsglied 28 ist dabei mit einer nicht dargestellten Ladestation verbunden bzw. bildet einen Teil einer nicht dargestellten Ladestation.

Das Kraftfahrzeug 10 weist ferner eine Heiz- und/oder Klimatisierungseinrichtung 32 auf, die dazu dient, einen nicht dargestellten Fahrgastinnenraum zu heizen und/oder zu kühlen bzw. zu klimatisieren im Allgemeinen. Die Heiz- und/oder Klimatisierungseinrichtung 32 ist mit dem elektrischen Energiespeicher 20 verbunden, um entsprechend mit elektrischer Energie versorgt zu werden. Die Heiz- und/oder Klimatisierungseinrichtung 32 ist ferner mit der Steuereinheit 22 verbunden, um die Heiz- und/oder Klimatisierungseinrichtung 32 anzusteuern und den Fahrgastinnenraum entsprechend zu klimatisieren. Die Steuereinheit 22 weist ferner nicht gesondert dargestellte Leistungserfassungsmittel auf, oder ist mit diesen verbunden, um die von der elektrischen Maschine 14 aufgenommene elektrische Energie zu erfassen und separat die von der Heiz- und/oder Klimatisierungseinrichtung 32 aufgenommene elektrische Energie zu erfassen.

Die Übertragungseinheit 30 bildet eine Schnittstelle zwischen der Ladestation und dem Kraftfahrzeug 16, um über die Ladungselektronik 24 den elektrischen Energiespeicher 20 auf- oder in besonderen Fällen zu entladen.

Die Ladungselektronik 24 dient dazu den elektrischen Energiespeicher aufzuladen. Die Ladungselektronik 24 kann dabei als Gleichrichter ausgebildet sein, um den elektrischen Energiespeicher 20 mit Gleichspannung aufzuladen.

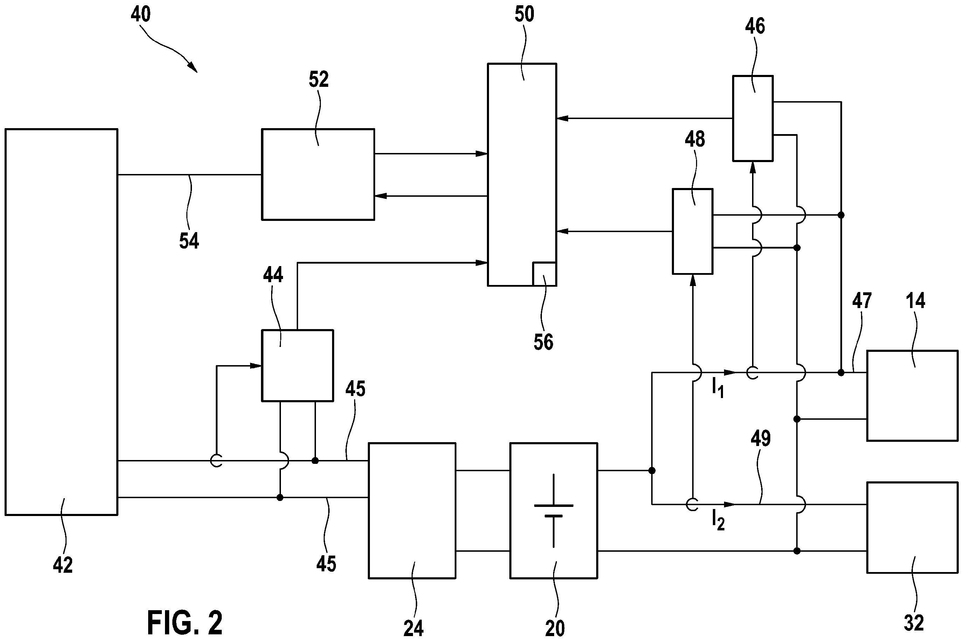

In Fig. 2 ist eine erfindungsgemäße Energieversorgungseinheit schematisch dargestellt und allgemein mit 40 bezeichnet. Die Energieversorgungseinheit 40 ist Teil des Kraftfahrzeugs 10 und dient dazu, die elektrische Maschine 14 und die Heiz- und Klimatisierungseinrichtung 32 mit elektrischer Energie zu versorgen. Die Energieversorgungseinheit 40 ist mit einer Ladestation 42 verbindbar, um den elektrischen Energiespeicher 20 mit elektrischer Energie zu versorgen und entsprechend aufzuladen und um Daten mit der Energieversorgungseinheit 40 auszutauschen, wie es im Folgenden näher erläutert wird.

Der elektrische Energiespeicher 20 ist über die Ladungselektronik 24 mit der Ladestation 42 verbindbar, um den elektrischen Energiespeicher 20 entsprechend aufzuladen. Der elektrische Energiespeicher 20 ist mit der elektrischen Maschine 14 und mit der Heiz- und/oder Klimatisierungseinrichtung 32 verbunden, um diese mit elektrischer Energie zu versorgen. Die Energieversorgungseinheit 40 weist eine erste Leistungserfassungseinheit 44 auf, die mit Eingangsleitungen 45 bzw. Eingangsklemmen 45 der Ladungselektronik 24 verbunden ist. Die erste Leistungserfassungseinheit 44 dient dazu, die von der Ladestation 42 auf den elektrischen Energiespeicher 20 übertragene elektrische Energie zu erfassen. Die Energieversorgungseinheit 40 weist ferner eine zweite und eine dritte Leistungserfassungseinheit 46, 48 auf. Die zweite Leistungserfassungseinheit 46 ist mit Eingangsleitungen 47 der elektrischen Maschine 14 verbunden, um die von der elektrischen Maschine 14 aufgenommene elektrische Energie zu erfassen. Die dritte Leistungserfassungseinheit 48 ist mit Eingangsleitungen 49 der Heiz- und/oder Klimatisierungseinrichtung 32 verbunden, um die von der Heiz- und/oder Klimatisierungseinrichtung 32 aufgenommene elektrische Energie zu erfassen.

Die Energieversorgungseinheit 40 weist ferner eine Steuereinheit 50 auf, die mit den Energieerfassungseinheiten 44, 46, 48 verbunden ist. Die Steuereinheit 50 ist mit einer Schnittstelle 52 verbunden, die zum Austausch von Daten mit der Ladestation verbindbar ist.

Die zweite Leistungserfassungseinheit 46 misst einen von der elektrischen Maschine 14 aufgenommenen elektrischen Strom I1 und die von dem elektrischen Energiespeicher 20 bereitgestellte elektrische Spannung. Dadurch bestimmt bzw. erfasst die zweite Leistungserfassungseinheit 46 die von der elektrischen Maschine 14 aufgenommene elektrische Energie. Entsprechend erfasst die dritte Leistungserfassungseinheit 48 ebenfalls die von dem elektrischen Energiespeicher 20 bereitgestellte elektrische Spannung und einen von der Heiz- und/oder Klimatisierungseinrichtung 32 aufgenommenen elektrische Strom I2, um entsprechend die von der Heiz- und/oder Klimatisierungseinrichtung 32 aufgenommene elektrische Energie zu erfassen.

Die Steuereinheit 50 ist mit den Leistungserfassungseinheiten 44, 46, 48 verbunden, um die Gesamtenergie und die von der elektrischen Maschine 14 und von der Heiz- und/oder Klimatisierungseinrichtung 32 aufgenommene elektrische Energie separat zu bestimmen. Die Steuereinheit 50 weist einen Speicher 56 auf, um die entsprechend ermittelten Energiewerte zu speichern. Die Steuereinheit 50 ist mit der Schnittstelle 52 verbunden, um die gespeicherten Energiewerte an die Ladestation 42 zu übertragen. Die Energiewerte können mittels einer Datenleitung 54 an die Ladestation 42 übermittelt werden. Alternativ können die Energiewerte über eine drahtlose Verbindung oder als aufmoduliertes Signal über die Übertragungseinheit 30 an die Ladestation 42 übermittelt werden.

Die so erfassten separaten elektrischen Leistungen bzw. elektrischen Energiemengen, die von der elektrischen Maschine 14 zur Fortbewegung des Kraftfahrzeugs 10 und von der Heiz- und/oder Klimatisierungseinrichtung 32 zum Klimatisieren des Kraftfahrzeugs 10 aufgenommen wurden, können an die Ladestation 42 übermittelt werden, so dass diese separaten Energiemengen mit unterschiedlichen Preisen bzw. unterschiedlichen Steuersätzen abgerechnet werden können. Ferner liegt durch die separate Erfassung die Energiemenge vor, die zum Fortbewegen des Kraftfahrzeugs aufgewendet wurde, wodurch das Kraftfahrzeug 10 im Allgemeinen und/oder eine Benutzung von Fahrtwegen besteuert werden kann.

Da die entsprechende Leistungsverteilung auf die elektrische Maschine 14 und die Heiz- und/oder Klimatisierungseinrichtung 32 erst nach Verbrauch der Energie vorliegt, kann die elektrische Energie beim Aufladen des Energiespeichers 20 mit dem höchsten Preis berechnet werden und beim nächsten Ladevorgang, wenn die entsprechende Verteilung vorliegt, die Daten korrigiert werden und entsprechend mit den Kosten für die neu aufgenommene elektrische Energie verrechnet werden.

Ferner kann auf der Grundlage der gemessenen Daten eine zukünftige Verteilung und eine entsprechende Abrechnung geschätzt werden, die beim nächsten Ladevorgang entsprechend korrigiert wird.

Ferner kann die während eines Ladevorgangs von der Heiz- und/oder Klimatisierungseinrichtung 32 aufgenommene elektrische Energie direkt mit dem korrekten Preis bzw. der korrekten Steuer verrechnet werden.

Im Allgemeinen kann somit eine Energieversorgungseinheit 40 bereitgestellt werden, die es ermöglicht, die aufgenommene Energie korrekt zu erfassen und entsprechend korrekt abzurechnen, wodurch die Gesamtkosten zum Betreiben des Kraftfahrzeugs 10 reduziert sind bzw. wodurch eine Besteuerung entsprechend der tatsächlichen Nutzung der Energie möglich wird.

Die elektrische Energie zum Betreiben der elektrischen Maschine berechnet sich nach der Formel:

$$W\_Antrieb = (W\_Antrieb / (W\_Antrieb + W\_HK))* W\_Gesamt,$$

wobei W_Antrieb die elektrische Energie zum Antreiben des Kraftfahrzeugs 10 ist, W_HK die elektrische Energie zum Betreiben der Heiz- und/oder Klimatisierungseinrichtung 32 und W_Gesamt die gesamte aufgenommene elektrische Energie ist.

Die Leistung, die von der Heiz- und/oder Klimatisierungseinrichtung 32 aufgenommen wird, berechnet sich wie folgt:

$$W\_HK = (W\_HK / (W\_Antrieb + W\_HK)) * W\_Gesamt.$$

Die Gesamtenergie W_Gesamt kann durch die Leistungserfassungseinheit 44 bestimmt werden oder durch eine Messeinrichtung in der Ladestation. Die von den Heiz- und/oder Klimatisierungsmitteln 32 während des Ladevorgangs aufgenommene Energie wird von der Gesamtenergie W_Gesamt abgezogen. Wie aus den Formeln ersichtlich ist, wird der Wirkungsgrad des Energiespeichers 20 bei der Berechnung berücksichtigt.

**Patentansprüche**

1. Energieversorgungseinheit (40) für ein Kraftfahrzeug (10) mit

   - einem elektrischen Energiespeicher (20) zum Speichern von elektrischer Energie,
   - elektrischen Anschlussmitteln (26) zum Anschließen des elektrischen Energiespeichers (20) über eine Laduhgselektronik (24) an eine externe Spannungsquelle (32) einer Ladestation (42), um den elektrischen Energiespeicher (20) aufzuladen,
   - einem ersten Stromzweig (47), um einen Antriebsstrang (12) mit einem elektrischen Antrieb (14) des Kraftfahrzeugs (10), der zum Antreiben von angetriebenen Rädern (16L, 16R) des Kraftfahrzeugs (10) dient, mit elektrischer Energie zu versorgen,
- einem zweiten Stromzweig (49), um Heiz- und/oder Klimatisierungsmittel (32) des Kraftfahrzeugs (10) mit elektrischer Energie zu versorgen,
- einer ersten Leistungserfassungseinheit (44), die mit Eingangsleitungen (45) bzw. Eingangsklemmen (45) der Ladungselektronik (24) verbunden ist und dazu dient, die von der Ladestation (42) auf den elektrischen Energiespeicher (20) übertragene elektrische Energie zu erfassen, und einer zweiten Leistungserfassungseinheit (46) und einer dritten Leistungserfassungseinheit (48); die dazu ausgebildet sind, die von dem elektrischen Antrieb (14) aufgenommene elektrische Energie und die von den Heiz- und/oder Klimatisierungsmitteln (32) aufgenommene elektrische Energie separat zu erfassen, **dadurch gekennzeichnet, dass** die Energieversorgungseinheit (40) eine Steuereinheit (50) aufweist, die mit den zweiten und dritten Leistungserfassungseinheiten (46, 48) verbunden ist, um Werte der jeweils aufgenommenen elektrischen Energie zu bestimmen, wobei die Steuereinheit (50) mit der ersten Leistungserfassungseinheit (44) verbunden ist, die den Anschlussmitteln (26) zugeordnet ist, um die gesamte von der Energieversorgungseinheit (40) aufgenommene elektrische Energie zu bestimmen, und um die gesamt aufgenommene Energie und die vom elektrischen Antrieb (14) und von den Heiz- und/oder Klimatisierungsmitteln (32) aufgenommene elektrische Energie separat zu erfassen.

2. Energieversorgungseinheit (40) nach Anspruch 1, wobei die Steuereinheit (50) Speichermittel (56) aufweist, um die Werte der aufgenommenen elektrischen Energie zu speichern.

3. Energieversorgungseinheit (40) nach einem der Ansprüche 1 oder 2, wobei die Steuereinheit (50) mit einer Schnittstelle (52) verbunden ist, die dazu ausgebildet ist, mit externen Komponenten, insbesondere der Ladestation (42) Daten auszutauschen, insbesondere um die Werte der beim Laden aufgenommenen bzw. in dem elektrischen Antrieb (14) verbrauchten und/oder in den Heiz- und/oder Klimatisierungsmitteln (32) verbrauchten elektrischen Energie zu übermitteln.

4. Energieversorgungseinheit (40) nach einem der Ansprüche 1 bis 3, wobei die Leistungserfassungsmittel (46, 48) Spannungserfassungsmittel zum Erfassen einer elektrischen Spannung des elektrischen Energiespeichers (20) und Stromerfassungsmittel zum Erfassen eines elektrischen Stroms (I1, I2) der Stromzweige aufweist.

5. Kraftfahrzeugantriebsstrang (12) mit einer elektrischen Maschine (14) zum Bereitstellen von Antriebsleistung und einer Energieversorgungseinheit (40) nach einem der Ansprüche 1 bis 4, zum Bereitstellen von elektrischer Energie.

6. Verfahren zum Ermitteln von aufgenommener elektrischer Energie mittels einer Energieversorgungseinheit (40) nach einem der Ansprüche 1 bis 4, wobei die von einem elektrischen Antrieb (14) aufgenommene elektrische Energie bestimmt wird, und wobei die von Heiz- und/oder Klimatisierungsmittel (32) aufgenommene elektrische Energie separat bestimmt wird.

7. Verfahren nach Anspruch 6, wobei Werte der jeweiligen aufgenommenen elektrischen Energie gespeichert werden und während eines Ladevorgangs eines elektrischen Energiespeichers (20) an eine Ladestation (42) übermittelt werden.

8. Verfahren nach Anspruch 6 oder 7, wobei ein Wirkungsgrad eines elektrischen Energiespeichers (20) bei der Bestimmung der jeweils aufgenommenen elektrischen Energie berücksichtigt wird.

9. Verfahren nach Anspruch 6 oder 7, wobei während eines Ladevorgangs des elektrischen Energiespeichers (20) ein Wert entsprechend der während des Ladevorgangs von den Heiz- und/oder Klimatisierungsmitteln (32) aufgenommenen elektrischen Energie an die Ladestation (42) übermittelt wird.

10. Verfahren nach einem der Ansprüche 6 bis 9, wobei Kosten für die von der Energieversorgungseinheit (40) aufgenommene elektrische Energie auf der Grundlage der separat bestimmten Energien ermittelt werden.

Claims

1. Energy supply unit (40) for a motor vehicle (10), having

- an electrical energy store (20) for storing electrical energy,
- electrical connection means (26) for connecting the electrical energy store (20) to an external voltage source (32) of a charging station (42) via charge electronics (24) in order to charge the electrical energy store (20),
- a first current branch (47) in order to supply electrical energy to a drive train (12) having an electrical drive (14) of the motor vehicle (10), which is used to drive driven wheels (16L, 16R) of the motor vehicle (10),
- a second current branch (49) in order to supply electrical energy to heating and/or air-conditioning means (32) of the motor vehicle (10),
- a first power capture unit (44) which is connected to input lines (45) or input terminals (45) of the charge electronics (24) and is used to capture the electrical energy transmitted from the charging station (42) to the electrical energy store (20), and
- a second power capture unit (46) and a third power capture unit (48) which are designed to separately capture the electrical energy consumed by the electrical drive (14) and the electrical energy consumed by the heating and/or air-conditioning means (32), **characterized in that** the energy supply unit (40) has a control unit (50) which is connected to the second and third power capture units (46, 48) in order to determine values of the respectively consumed electrical energy, wherein the control unit (50) is connected to the first power capture unit (44) which is assigned to the connection means (26) in order to determine the total electrical energy consumed by the energy supply unit (40) and in order to separately capture the total consumed energy and the electrical energy consumed by the electrical drive (14) and by the heating and/or air-conditioning means (32).

2. Energy supply unit (40) according to Claim 1, wherein the control unit (50) has storage means (56) in order to store the values of the consumed electrical energy.

3. Energy supply unit (40) according to either of Claims 1 and 2, wherein the control unit (50) is connected to an interface (52) which is designed to interchange data with external components, in particular the charging station (42), in particular in order to transmit the values of the electrical energy received during charging or consumed in the electrical drive (14) and/or consumed in the heating and/or air-conditioning means (32).

4. Energy supply unit (40) according to one of Claims 1 to 3, wherein the power capture means (46, 48) has voltage capture means for capturing an electrical voltage of the electrical energy store (20) and current capture means for capturing an electrical current (I1, 12) of the current branches.

5. Motor vehicle drive train (12) having an electrical machine (14) for providing drive power and an energy supply unit (40) according to one of Claims 1 to 4 for providing electrical energy.

6. Method for determining received electrical energy by means of an energy supply unit (40) according to one of Claims 1 to 4, wherein the electrical energy received by an electrical drive (14) is determined, and wherein the electrical energy received by heating and/or air-conditioning means (32) is separately determined.

7. Method according to Claim 6, wherein values of the respective received electrical energy are stored and are transmitted to a charging station (42) during an operation of charging an electrical energy store (20).

8. Method according to Claim 6 or 7, wherein an efficiency of an electrical energy store (20) is taken into account when determining the respectively received electrical energy.

9. Method according to Claim 6 or 7, wherein, during an operation of charging the electrical energy store (20), a value corresponding to the electrical energy received by the heating and/or air-conditioning means (32) during the charging operation is transmitted to the charging station (42).

10. Method according to one of Claims 6 to 9, wherein costs of the electrical energy received by the energy supply unit (40) are determined on the basis of the separately determined energies.

**Revendications**

1. Unité d'alimentation en énergie (40) destinée à un véhicule automobile (10), ladite unité comprenant

- un accumulateur d'énergie électrique (20) destiné à accumuler de l'énergie électrique,
- des moyens de connexion électrique (26) destinés à connecter l'accumulateur d'énergie électrique (20), par le biais d'une électronique de charge (24), à une source de tension extérieure (32) d'une station de charge (42) afin de charger l'accumulateur d'énergie électrique (20),

- une première branche de courant (47) destinée à alimenter en énergie électrique un groupe motopropulseur (12) pourvu d'un entraînement électrique (14) du véhicule automobile (10) qui est utilisé pour entraîner des roues motrices (16L, 16R) du véhicule automobile (10),

- une deuxième branche de courant (49) destinée à alimenter en énergie électrique des moyens de chauffage et/ou de climatisation (32) du véhicule automobile (10),

- une première unité de détection de puissance (44) qui est reliée à des lignes d'entrée (45) ou des bornes d'entrée (45) de l'électronique de charge (24) et qui sert à détecter l'énergie électrique transmise de la station de charge (42) à l'accumulateur d'énergie électrique (20) et

- une deuxième unité de détection de puissance (46) et une troisième unité de détection de puissance (48) qui sont adaptées pour détecter séparément l'énergie électrique absorbée par l'entraînement électrique (14) et l'énergie électrique absorbée par les moyens de chauffage et/ou de climatisation (32), **caractérisée en ce que** l'unité d'alimentation en énergie (40) comporte une unité de commande (50) qui est reliée aux deuxième et troisième unités de détection de puissance (46, 48) pour déterminer des valeurs de l'énergie électrique respectivement absorbée, l'unité de commande (50) étant reliée à la première unité de détection de puissance (44) associée aux moyens de connexion (26) pour déterminer l'énergie électrique totale absorbée par l'unité d'alimentation en énergie (40) et pour détecter séparément l'énergie absorbée totale et l'énergie électrique absorbée par l'entraînement électrique (14) et les moyens de chauffage et/ou de climatisation (32).

2. Unité d'alimentation en énergie (40) selon la revendication 1, l'unité de commande (50) comprenant des moyens de mémorisation (56) destinés à mémoriser les valeurs de l'énergie électrique absorbée.

3. Unité d'alimentation en énergie (40) selon l'une des revendications 1 ou 2, l'unité de commande (50) étant reliée à une interface (52) conçue pour échanger des données avec des composants extérieurs, en particulier la station de charge (42), en particulier pour transmettre les valeurs de l'énergie électrique absorbée pendant la charge ou consommée dans l'entraînement électrique (14) et/ou consommée dans les moyens de chauffage et/ou de climatisation (32).

4. Unité d'alimentation en énergie (40) selon l'une des revendications 1 à 3, les moyens de détection de puissance (46, 48) comprennent des moyens de détection de tension destinés à détecter une tension électrique de l'accumulateur d'énergie électrique (20) et des moyens de détection de courant destinés à détecter un courant électrique (I1, I2) des branches de courant.

5. Groupe motopropulseur de véhicule automobile (12) comprenant une machine électrique (14) destinée à produire de la puissance d'entraînement et une unité d'alimentation en énergie (40) selon l'une des revendications 1 à 4 destinée à produire de l'énergie électrique.

6. Procédé de détermination de l'énergie électrique absorbée au moyen d'une unité d'alimentation en énergie (40) selon l'une des revendications 1 à 4, l'énergie électrique absorbée par un entraînement électrique (14) étant déterminée, et l'énergie électrique absorbée par les moyens de chauffage et/ou de climatisation (32) étant déterminée séparément.

7. Procédé selon la revendication 6, des valeurs de l'énergie électrique absorbée respective étant accumulées et transmises à une station de charge (42) pendant un processus de charge d'un accumulateur d'énergie électrique (20).

8. Procédé selon la revendication 6 ou 7, le degré de rendement d'un accumulateur d'énergie électrique (20) étant pris en compte lors de la détermination de l'énergie électrique absorbée respective.

9. Procédé selon la revendication 6 ou 7, la valeur correspondant à l'énergie électrique absorbée pendant le processus de charge des moyens de chauffage et/ou de climatisation (32) étant transmise à la station de charge (42) lors d'un processus de charge de l'accumulateur d'énergie électrique (20).

10. Procédé selon l'une des revendications 6 à 9, les coûts de l'énergie électrique absorbée par l'unité d'alimentation en énergie (40) étant évalués sur la base des énergies déterminées séparément.

**FIG. 1**

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2273614 A